(19) Europäisches Patentamt
European Patent Office
Office européen des brevets

(11) **EP 3 663 950 A1**

(12) **EUROPEAN PATENT APPLICATION**

(43) Date of publication:
**10.06.2020 Bulletin 2020/24**

(51) Int Cl.:
**G06F 21/56** (2013.01)     **G06N 3/04** (2006.01)
**H04L 29/06** (2006.01)

(21) Application number: **18209884.8**

(22) Date of filing: **03.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **British Telecommunications public limited company**
**London EC1A 7AJ (GB)**

(72) Inventor: **The designation of the inventor has not yet been filed**

(74) Representative: **British Telecommunications public limited company**
**Intellectual Property Department**
**Ground Floor, Faraday Building**
**1 Knightrider Street**
**London EC4V 5BT (GB)**

(54) **TEMPORAL ANOMALY DETECTION IN COMPUTER NETWORKS**

(57)     A computer implemented method of detecting anomalous behaviour within a computer network, the method comprising: accessing a set of data records for a time period of predetermined length, each record corresponding to an occurrence of communication occurring via the computer network and including a plurality of attributes of the communication; generating, for each of at least a subset of the data records, a training data item for a neural network, the training data item being derived from at least a portion of the attributes of the record and the neural network having input units and output units corresponding to items in a corpus of attribute values for communications occurring via the network; training the neural network using the training data so as to define a vector representation for each attribute value in the corpus based on weights in the neural network for an input unit corresponding to the attribute value; repeating the accessing, generating, augmenting and training steps for subsequent time periods of the predetermined length to generate a vector representation for each attribute value in the corpus for each time period; and for at least a subset of attribute values in the corpus, comparing the multiple generations of vector representations to identify a change in one or more vector representation as an indication of an anomalous change of behaviour in the computer network.

FIGURE 2

# Description

The present invention relates to the detection of anomalous behaviour of a computer system in a computer network.

Network connected computer systems, whether physical and/or virtual computer systems connected via one or more physical and/or virtual network communication mechanisms, can be susceptible to malicious attack. For example, one or more computer systems can become infected with malicious software such as botnet agents or the like, and such infected systems can instigate malicious communication with other systems such as communications intended to propagate such infections and/or communications intended to affect the operation of target computer systems (e.g. denial of service attacks, hijacking or the like).

It is a longstanding desire to detect such malicious communication occurring in a network of computer systems in order that mitigation measures can be implemented.

The present invention accordingly provides, in a first aspect, a computer implemented method of detecting anomalous behaviour within a computer network, the method comprising: accessing a set of data records for a time period of predetermined length, each record corresponding to an occurrence of communication occurring via the computer network and including a plurality of attributes of the communication; generating, for each of at least a subset of the data records, a training data item for a neural network, the training data item being derived from at least a portion of the attributes of the record and the neural network having input units and output units corresponding to items in a corpus of attribute values for communications occurring via the network; training the neural network using the training data so as to define a vector representation for each attribute value in the corpus based on weights in the neural network for an input unit corresponding to the attribute value; repeating the accessing, generating, augmenting and training steps for subsequent time periods of the predetermined length to generate a vector representation for each attribute value in the corpus for each time period; and for at least a subset of attribute values in the corpus, comparing the multiple generations of vector representations to identify a change in one or more vector representation as an indication of an anomalous change of behaviour in the computer network.

Preferably, the neural network is trained iteratively at each repetition of the training step so as to cumulatively train the neural network for each repetition.

Preferably, a new neural network is trained at each repetition of the training step.

Preferably, the method further comprises, responsive to the identification of an anomalous change of behaviour in the computer network, implementing one or more protective measures.

Preferably, the protective measures include one or more of: deploying and/or configuring a firewall at one or more computer systems connected via the computer network; deploying and/or configuring anti-malware facility at one or more computer systems connected via the computer network; deploying and/or configuring an antivirus facility at one or more computer systems connected via the computer network; adjusting a sensitivity and/or level of monitoring of a security facility in one or more computer systems connected via the computer network; and selectively disconnecting one or more computer systems from the computer network.

Preferably, the attributes of a communication include one or more of: an address of a source of the communication; an address of a destination of the communication; an identification of a communications port at a source of the communication; an identification of a communications port at a destination of the communication; an identifier of a protocol of the communication; a size of the communication; a number of packets of the communication; a set of network protocol flags used in the communication; a timestamp of the communication; and a duration of the communication.

Preferably, the neural network has a single layer of hidden units logically arranged between the input units and the output units.

Preferably, comparing multiple generations of vector representations for an attribute value includes performing a vector similarity function on the vector representations to determine a degree of similarity.

Preferably, the identification of a change in a vector representation indicative of an anomalous change includes detecting a vector similarity below a predetermined threshold degree of similarity.

Preferably, comparing the multiple generations of vector representations includes, for each of one or more attribute values in the corpus, training a recurrent neural network based on the multiple generations of vector representations such that the trained recurrent neural network is suitable for classifying a subsequent vector representation as anomalous in relation to multiple generations of vector representations.

The present invention accordingly provides, in a second aspect, a computer system including a processor and memory storing computer program code for performing the steps of the method set out above.

The present invention accordingly provides, in a third aspect, a computer program element comprising computer program code to, when loaded into a computer system and executed thereon, cause the computer to perform the steps of the method set out above.

Embodiments of the present invention will now be described, by way of example only, with reference to the accompanying drawings, in which:

Figure 1 is a block diagram a computer system suitable for the operation of embodiments of the present invention;

Figure 2 is a component diagram of an arrangement for detecting anomalous behaviour within a computer network in accordance with embodiments of the present invention;

Figure 3 depicts a partial exemplary neural network suitable for operation in embodiments of the present invention;

Figure 4 is a component diagram of the embedding generator of Figure 2 including an augmenter component according embodiments of the present invention; and

Figure 5 is a flowchart of an exemplary method of detecting anomalous behaviour within a computer network in accordance with embodiments of the present invention.

Embodiments of the present invention address the challenge of detecting anomalous behaviour of computer systems communicating via a computer network by detecting anomalies in network communications occurring via the computer network. Such anomalies are detected based on representations of network communications known as *embeddings* in which each network communication is represented as a plurality of vector representations, each vector corresponding to an attribute of the communication including, for example, inter alia: a source address, a destination address, a source port, a destination port, a size, a number of packets, a timestamp, a duration, a network protocol, one or more network protocol parameters and other attributes as will be apparent to those skilled in the art. Thus, each communication occurring in the computer network can be represented as a plurality of vector representations (known as embeddings) that serve to characterise the communication, with multiple such communications being so encoded. Such embeddings serve to characterise typical network communication within the computer network. For example, embeddings generated during one or more time periods when the network is known to be absent malicious intervention serve to characterise the operation of the network devoid of such malicious intervention. Such embeddings can be considered *baseline* embeddings. Embeddings generated for subsequent time periods and, in some embodiments, continuously, can be compared against such baseline embeddings to detect changes occurring in the network communications via the network. Such changes can be considered anomalous, such as when a change exceeds a predetermined threshold degree of change, with the detection of such anomalies being used to trigger responsive measures such as network or computer system protective measures.

The generation of the vector representations as embeddings is achieved by training a fully connected neural network with a single hidden layer smaller than input and output layers. Each node in each of the input and output layers corresponds to a value of an attribute of a network communication such that all possible attribute values (across potentially multiple attribute types, such as addresses, protocols, ports etc.) constitute a corpus of attribute values for communications occurring via the network. Thus, preferably, the entire corpus of attribute values is represented by a node in each of the input layer and the output layer. The neural network is trained using training data derived from records of communication from which attribute values are extracted. Such an approach to the generation of embeddings is described in detail in "IP2Vec: Learning Similarities between IP Addresses" (Ring et al, 2017 IEEE International Conference on Data Mining Workshops) which itself builds upon the approach described in detail in "Efficient Estimation of Word Representations in Vector Space" (Mikolov et al., ArXiv, CoRR (Computing Research Repository), 2013). Both Ring et al. and Mikolov et al. are specifically cited here for their respective disclosures which, combined with the present specification, are to be read to provide sufficient disclosure of the present invention.

Embodiments of the present invention improve upon the approach of Ring et al. by the use of pre-processing of training data to enhance the characterisation of network communication in the generated embeddings. Further, post-processing of embeddings is provided to improve anomaly detection.

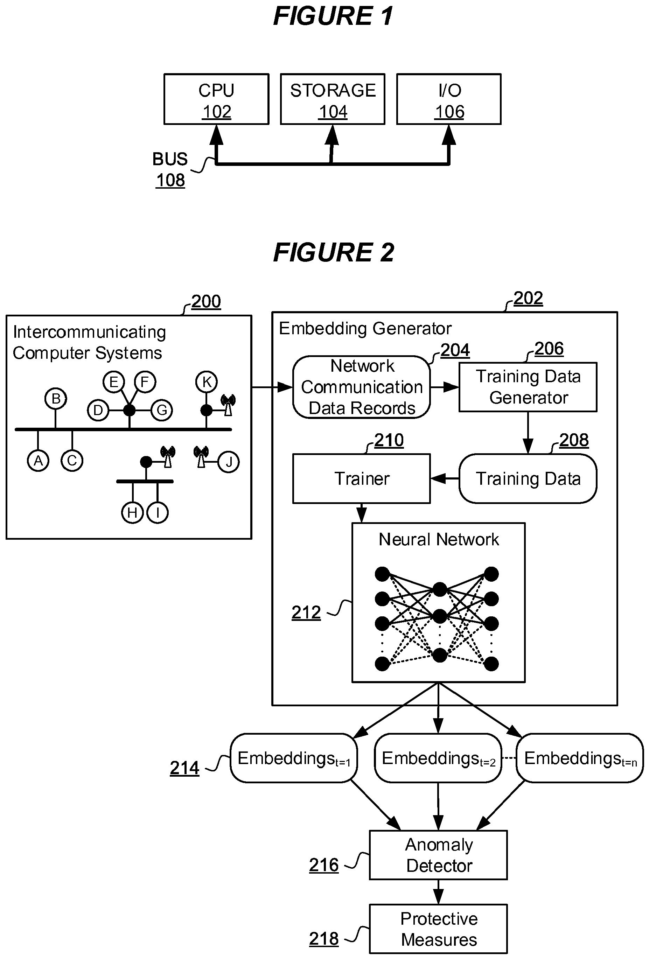

Figure 1 is a block diagram of a computer system suitable for the operation of embodiments of the present invention. A central processor unit (CPU) 102 is communicatively connected to a storage 104 and an input/output (I/O) interface 106 via a data bus 108. The storage 104 can be any read/write storage device such as a random-access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

Figure 2 is a component diagram of an arrangement for detecting anomalous behaviour within a computer network in accordance with embodiments of the present invention. An exemplary network of intercommunicating computer systems 200 is illustrated comprising one or more virtual or physical network elements such as wired, wireless, cellular, local area, wide area and other networks. Communicatively connected via the network are physical and/or virtual computer systems indicated as A through K. The computer systems intercommunicate via the network using one or more networking protocols such that each network communication includes attributes as features of the communication. Such attributes for a communication can include, inter alia: an address of a source of the communication; an address of a destination of the communication; an identification of a communications port at a source of the communication; an identification of a communications port at a destination of the communication; an identifier of a protocol of the communication; a size of the communication; a number of packets of the communication; a set of network protocol flags used in the communication; a timestamp of the communication; a duration of the communication; and other attributes as will be apparent to those skilled in the art.

An embedding generator 202 is provided as a software, hardware, firmware or combination component suitable for receiving network communication data records 204 in respect of network communications occurring via the computer network. Each network communication data record 204 is a record of an occurrence of communication occurring between computer systems via the network. For example, a tool suitable for generating network communication data records 204 is NetFlow. NetFlow enables devices such as routers, switches, monitors and computer systems to analyse traffic passing through, for example, a network interface. Each record of NetFlow data represents a network flow, i.e., a unidirectional sequence of network packets between endpoints. Each flow can be described by, inter alia: source and destination addresses; source and destination port numbers; a protocol; a number of bytes; a number of packets; a timestamp; a duration; and a type of service. One challenges in processing NetFlow data is its sheer size, its sparsity, and the fact that is hard for the human eye to interpret it. Hence there is a need for automated ways of processing this type of data.

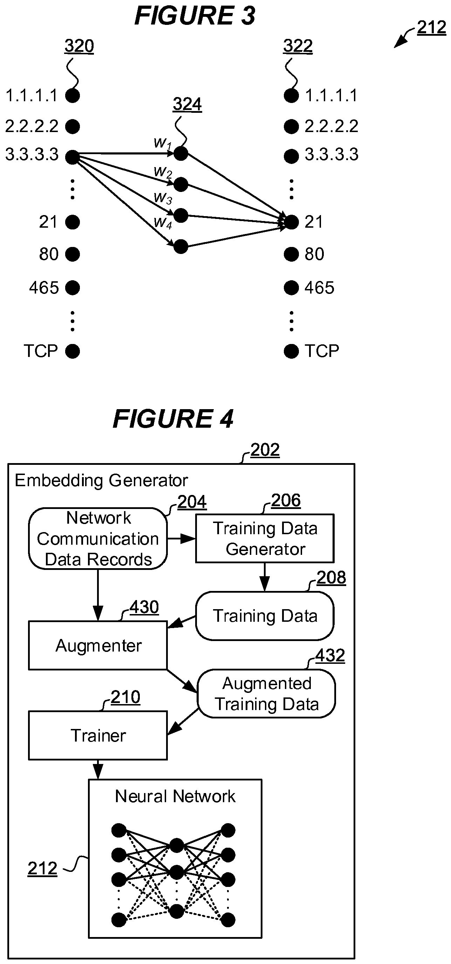

The embedding generator 202 includes a training data generator 206 as a software, hardware, firmware or combination component arranged to access the network communication data records and generate training data for a neural network 212. Preferably, the training data is generated according to the approach of Ring et al. (see, in particular, section IV of Ring et al. and the example illustrated in Figure 3 of Ring et al.) such that each network communication data record 204 is used to generate a plurality of training data items. Notably, the particular selection of context in Ring et al. as a subset of the fields of each network communication data record 204 (a *flow* in Ring et al.) can be adapted and predefined for a particular implementation and/or application of embodiments of the present invention according to need. For example, more or fewer attributes of network communication data records 204 can be included in the generation of training data items. Thus, the training data generator 206 generates the training data 208 that is subsequently used by a neural network trainer 210 to train the neural network 212. The trainer 210 is a software, hardware, firmware or combination component arranged to read training data items 208 and apply them through a neural network training process to adjust the interconnection weights in the neural network 212. For example, each training data item 208 can be constituted as a pair of attribute values for a single network communication data record 204, the attribute values existing in the corpus of all attribute values for network communication data records 204 with a first attribute value being used to trigger an input node corresponding to that attribute value in the neural network, and the second attribute value being used as a desired output of the neural network. A backpropagation training algorithm can be applied to train the neural network using such pairs of values (see, for example, "Learning internal representations by backpropagating errors", D. E. Rumelhart, G. E. Hinton, R. J. Williams, September 1985, Institute for Cognitive Science Report 8506, University of California, San Diego). Preferably, the neural network 212 is trained using stochastic gradient descent and backpropagation.

Once trained, the neural network 212 serves as a basis for defining embeddings 214 for each attribute value in the corpus based on the data used to train the neural network 212. According to Ring et al., for a particular attribute value, a vector constituted by the values of the weights of all connections in the neural network 212 from an input node corresponding to the attribute value to each hidden node can constitute a vectoral embedding for the attribute value. Referring now to Figure 3 which depicts a partial exemplary neural network 212 suitable for operation in embodiments of the present invention. The neural network 212 of Figure 3 is a partial representation because it shows only the connections between a single input node and hidden nodes, and between the hidden nodes and an output node. The neural network 212 of Figure 3 depicts a set of input nodes 320 each corresponding to attribute values for a network communication. By way of example, the input nodes 320 are depicted including attribute values for network addresses, ports and network protocols. The exemplary input nodes 320 depicted include network addresses as internet protocol (IP) addresses 1.1.1.1, 2.2.2.2 and 3.3.3.3. Further, the exemplary input nodes 320 depicted include network ports 21, 80 and 465. Further, the exemplary input nodes 320 depicted include the network protocol "TCP "(transmission control protocol). Equivalent output nodes 322 are also provided. Figure 3 also depicts the weights $w_1$, $w_2$, $w_3$ and $w_4$ of connections between one input node for IP address 3.3.3.3 and a set of hidden units 324. In Figure 3, the neural network 212 is trained with the sample {3.3.3.3, 21}, so indicated by the weighted connections between the node for 3.3.3.3 and the hidden units, and between the hidden units and output node 21. A vector with the components w1, w2, w3 and w4 thus constitutes a vector representation of the IP address 3.3.3.3 and is an embedding for IP address 3.3.3.3.

According to embodiments of the present invention, multiple such embeddings 214 are generated for multiple different time periods such that each embedding 214 is derived from the neural network 212 trained using training data 208 generated from network communication data records 204 occurring within that time period. In this way, multiple generations of vector representations for each attribute value in the corpus are generated, each generation corresponding to data records received during a different time period. A time period can be defined such as by way of start and end times, a start time and duration, a start time and end-condition, start and end conditions, or other mechanisms for defining a time period as will be apparent to those skilled in the art. Accordingly, for each time period t, network communication data records 204 arising within the time period are collected and used to generate training data 208 associated with that time period. The neural network 212 is trained using training data 208 for the time period and embeddings 214 are defined as vector representations of weights in the trained neural network 212 for at least a subset of the attribute values represented by the input nodes 320. Preferably, only the weights from an input node 320 to hidden nodes 324 are used in the vector representation. Vector representations for a time t period are then stored as embeddings associated with the period $t$ thus: embeddings$_{t=1}$, embeddings$_{t=2}$... embeddings$_{t=n}$.

Figure 2 also includes an anomaly detector 216 as a software, hardware, firmware or combination component operable to receive a plurality of embeddings 214 for comparison. In particular, the anomaly detector 216 performs a similarity analysis on a pair of vector representations for an attribute value, each vector representation corresponding to an embedding 214 generated for a different time period. In this way, differences between embeddings between time periods for a communications attribute value can be discerned and, where such differences meet or exceed a threshold degree of difference, a determination of the existence of an anomaly in the operation of a computer system communicating via the network can be made. The anomaly detector 216 can make the vector comparison using a vector similarity function such as a cosine similarity function for comparing vectors as is known in the art. Where a subsequent vector representation for a communications attribute value is sufficiently dissimilar to a vector for the attribute in a different time period (such as a baseline time period corresponding to a period during which computer systems are known to be unencumbered by malware), then an anomaly is identified. Sufficiency of dissimilarity (or similarity) can be predetermined in terms of a degree of difference characterised in dependence on the particular vector similarity function employed - such as an angular difference, an extent of vectoral magnitude difference or a combination or other such characterisations of difference as will be apparent to those skilled in the art. Protective measures 218 can be implemented to protect one or more of the computer systems in the set of intercommunicating computer systems 200 in dependence on the detection of an anomaly by the anomaly detector 216.

Protective measures 218 are deployable software, hardware, firmware or combination facilities or features that can include, for example, the deployment of firewalls, new security measures, additional authentication or authorisation checks, execution or updating of antimalware services, preventing communication with one or more computer systems or the whole set of intercommunicating computer systems 200, increasing a level of monitoring, tracing or logging and other protective measures as will be apparent to those skilled in the art. Thus, in use, the embedding generator 202 coupled with the anomaly detector 216 provide for the effective characterisation of network communications occurring via a computer network as vector representations of communication attribute values (embeddings 214) for each of a plurality of time periods such that anomalies detected between vector representations can trigger the deployment of protective measures 218.

In one embodiment, a new neural network 212 is trained afresh for each different time period for which the embedding generator 202 operates. Thus, the neural network 212 for a time period is trained using training data 208 derived from network communication data records 204 for communications occurring only within that time period, and each embedding 214 is derived from the neural network 212 accordingly. In accordance with an alternative embodiment, a single neural network 212 is used for all time periods such that the same neural network 212 is trained initially for a first time period t=1 and is further trained (constructively) for each subsequent time period t=2 to t=n for n time periods. In such an approach the embeddings for each time period embedding$_{t=1}$, embedding$_{t=2}$ ... embedding$_{t=n}$ constitute a development of an embedding for a preceding time period. Consequently, a series of embeddings arising from multiply training the same neural network 212 constitute a temporal sequence of embeddings suitable for training a further neural network as a *recurrent neural network*. Recurrent neural networks can be used to analyse sequential data due to their ability to take multiple inputs one after the other and save state information between inputs. Such recurrent neural networks can be trained in an unsupervised way by making the target output at each step the embeddings for a next step (prediction) or by training a sequence-to-sequence model to reconstruct the entire sequence (autoencoder). Prediction or reconstruction errors derived from a recurrent neural network can then be used by the anomaly detector 216 to indicate how likely a given sequence of embeddings is to be anomalous in comparison to normal sequences used during training. Thus, the anomaly detector 216 can be adapted to comparing multiple generations of vector representations by training a recurrent neural network for each of one or more attribute values in the corpus based on the multiple generations of vector representations. In this way, the trained recurrent neural network is suitable for classifying a subsequent vector representation as anomalous in relation to multiple generations of vector representations.

Figure 4 is a component diagram of the embedding generator of Figure 2 including an augmenter component according embodiments of the present invention.

Many of the elements of Figure 4 are identical to those described above with respect to Figure 2 and these will not be repeated here. Figure 4 is further adapted according to some embodiments of the present invention to enhance the training 208 by augmenting it. Thus, the embedding generator 202 of Figure 4 includes an augmenter 432 as a software, hardware, firmware or combination component arranged to receive or access each item of the training data 208 and the network communication data records 204 on the basis of which the training data 208 was generated, and to generate augmented training data 432 corresponding to the training data 208 with augmentations. The augmented training data 432 is then used by the trainer 210 to train the neural network 212 as previously described.

Specifically, the augmenter 430 performs augmentation of the training data 208 by replicating training data items so that they appear more than once in the augmented training data 432. A determination of whether to replicate a training data item is made based on one or more attributes of a network communication data record 204 corresponding to the training data item. The replication may involve mere duplication of one, more than one or all training data items generated based on a network communication record 204, or repetition of such training data items multiple times in the augmented training data 432. In this way, characteristics of network communication data records 204 deemed significant (based on one or more attribute values thereof) are emphasised in the augmented training data 432 by replication of training data items. In one embodiment, such significance is determined based on a value of one or more attributes in a network communication data record 204 corresponding to a size of a network communication, such that more sizeable communications (e.g. communications with more data, a larger payload, a longer duration or the like) are emphasised in the augmented training data 432 by replication of training data items. For example, the augmenter 430 can augment training data 208 to augmented training data 432 by replicating training data items in response to a determination that a value of a size attribute of a network communication data record 204 corresponding a training data item exceeds a predetermined threshold.

In one embodiment, training data items are replicated based on a duration of communication indicated within a network communication data record 204 as a communication *flow duration*. Let T_flow be a flow duration for a network communication, and T_max be a predetermined maximum duration (such as a maximum duration deemed plausible or a selected maximum duration). For each network communication data record 204, a number of times *m* a training data item 208 is to be replicated (i.e. a number of times a single training data item should exist in the augmented training data 432) is calculated as:

$$m = \lceil \text{T\_flow} / \text{T\_max} \rceil$$

where $\lceil \rceil$ denotes the ceiling operator. Hence, after augmentation, *m* training data items will be produced in the augmented training data 432 for each training data item generated in the training data 208 for the single network communication data record 204. Preferably, the duplicate data items are identical to an original training data item except that training data item corresponding to a duration (in this example) is adjusted to reflect the replication such that the duration for the first *m*-1 training data items is T_max, and the duration for a final training data item is T_flow-(*m*-1)T_max.

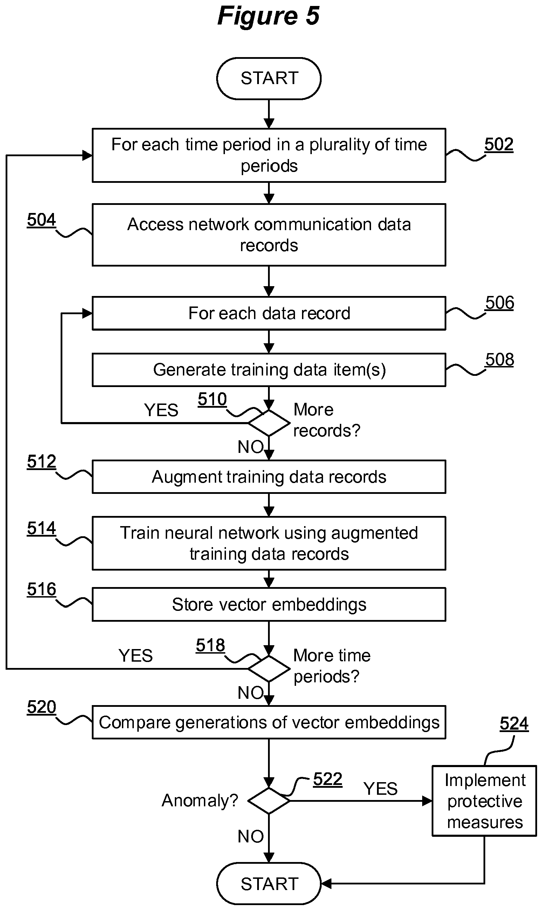

Figure 5 is a flowchart of an exemplary method of detecting anomalous behaviour within a computer network in accordance with embodiments of the present invention. Initially, at step 502, the method commences an iteration through a series of predetermined or determinable time periods *t*. At step 504 a set of network communication data records 204 for the time period are accessed. At step 506 an iteration is commenced for each data record in the set of accessed network communication data records 204. At step 508 the method generates one or more training data items for the current network communication data record 204. At step 510 the iteration continues for all network communication data records 204. According to some embodiments, the method subsequently augments, at step 512, the set of all training data items generated at step 508 for the current time period *t* by the augmentor 430 as previously described. At step 514 the neural network 212 is trained using the training data 208 (or, where augmented, the augmented training data 432). At step 516 the vector embeddings 214 for each value in the corpus of attribute values are stored for the current time period *t*. At step 518 the method iterates for all time periods. Subsequently, at step 520, the anomaly detector 216 compares generations of vector representation embeddings 214, e.g. using a vector similarity function such as cosine similarity. At step 522 detected anomalies lead to step 524 at which protective measures are deployed.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

**Claims**

1. A computer implemented method of detecting anomalous behaviour within a computer network, the method comprising:

    accessing a set of data records for a time period of predetermined length, each record corresponding to an occurrence of communication occurring via the computer network and including a plurality of attributes of the communication;
    generating, for each of at least a subset of the data records, a training data item for a neural network, the training data item being derived from at least a portion of the attributes of the record and the neural network having input units and output units corresponding to items in a corpus of attribute values for communications occurring via the network;
    training the neural network using the training data so as to define a vector representation for each attribute value in the corpus based on weights in the neural network for an input unit corresponding to the attribute value;
    repeating the accessing, generating, augmenting and training steps for subsequent time periods of the predetermined length to generate a vector representation for each attribute value in the corpus for each time period; and
    for at least a subset of attribute values in the corpus, comparing the multiple generations of vector representations to identify a change in one or more vector representation as an indication of an anomalous change of behaviour in the computer network.

2. The method of claim 1 wherein the neural network is trained iteratively at each repetition of the training step so as to cumulatively train the neural network for each repetition.

3. The method of claim 1 wherein a new neural network is trained at each repetition of the training step.

4. The method of any preceding claim further comprising, responsive to the identification of an anomalous change of behaviour in the computer network, implementing one or more protective measures.

5. The method of claim 4 wherein the protective measures include one or more of:

    deploying and/or configuring a firewall at one or more computer systems connected via the computer network; deploying and/or configuring anti-malware facility at one or more computer systems connected via the computer network; deploying and/or configuring an antivirus facility at one or more computer systems connected via the computer network;
    adjusting a sensitivity and/or level of monitoring of a security facility in one or more computer systems connected via the computer network; and selectively disconnecting one or more computer systems from the computer network.

6. The method of any preceding claim wherein the attributes of a communication include one or more of: an address of a source of the communication; an address of a destination of the communication; an identification of a communications port at a source of the communication; an identification of a communications port at a destination of the communication; an identifier of a protocol of the communication; a size of the communication; a number of packets of the communication; a set of network protocol flags used in the communication; a timestamp of the communication; and a duration of the communication.

7. The method of any preceding claim in which the neural network has a single layer of hidden units logically arranged between the input units and the output units.

8. The method of any preceding claim wherein comparing multiple generations of vector representations for an attribute value includes performing a vector similarity function on the vector representations to determine a degree of similarity.

9.  The method of claim 8 wherein the identification of a change in a vector representation indicative of an anomalous change includes detecting a vector similarity below a predetermined threshold degree of similarity.

10. The method of any preceding claim wherein comparing the multiple generations of vector representations includes, for each of one or more attribute values in the corpus, training a recurrent neural network based on the multiple generations of vector representations such that the trained recurrent neural network is suitable for classifying a subsequent vector representation as anomalous in relation to multiple generations of vector representations.

11. A computer system including a processor and memory storing computer program code for performing the steps of the method of any preceding claim.

12. A computer program element comprising computer program code to, when loaded into a computer system and executed thereon, cause the computer to perform the steps of a method as claimed in any of claims 1 to 10.

# FIGURE 1

# FIGURE 2

# FIGURE 3

# FIGURE 4

# Figure 5

```
                    ( START )
                        |
                        v
    +----------------------------------------+
    | For each time period in a plurality of |  502
    |             time periods               |
    +----------------------------------------+
                        |
                        v
504 +----------------------------------------+
    |   Access network communication data    |
    |                records                 |
    +----------------------------------------+
                        |
                        v
    +----------------------------------------+  506
--->|           For each data record         |
|   +----------------------------------------+
|                       |
|                       v
|   +----------------------------------------+  508
|   |       Generate training data item(s)   |
|   +----------------------------------------+
|                       |
|          510          v
|  YES  <>---- More
+------<    >  records?
           <>
            | NO
            v
512 +----------------------------------------+
    |       Augment training data records    |
    +----------------------------------------+
                        |
                        v
514 +----------------------------------------+
    |   Train neural network using augmented |
    |          training data records         |
    +----------------------------------------+
                        |
                        v
516 +----------------------------------------+
    |          Store vector embeddings       |
    +----------------------------------------+
                        |
            518         v
   YES  <>---- More time
--------<    >  periods?
          <>
           | NO
           v
520 +----------------------------------------+
    |  Compare generations of vector         |
    |            embeddings                  |
    +----------------------------------------+
                        |                          524
                        v     522      YES   +-------------+
             Anomaly? <>------------------>  | Implement   |
                       <>                    | protective  |
                        | NO                 | measures    |
                        v                    +-------------+
                    ( START )<---------------------+
```

Europäisches
Patentamt

European
Patent Office

Office européen
des brevets

# EUROPEAN SEARCH REPORT

Application Number

EP 18 20 9884

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Benjamin J Radford ET AL: "Network Traffic Anomaly Detection Using Recurrent Neural Networks", , 28 March 2018 (2018-03-28), XP055554771, Retrieved from the Internet: URL:https://arxiv.org/pdf/1803.10769.pdf [retrieved on 2019-02-12] * Section III Data * * Section IV METHODOLOGY * ----- | 1-12 | INV. G06F21/56 G06N3/04 H04L29/06 |
| X | RALF C. STAUDEMEYER ET AL: "Evaluating performance of long short-term memory recurrent neural networks on intrusion detection data", PROCEEDINGS OF THE SOUTH AFRICAN INSTITUTE FOR COMPUTER SCIENTISTS AND INFORMATION TECHNOLOGISTS CONFERENCE ON, SAICSIT '13, 1 January 2013 (2013-01-01), page 218, XP055347047, New York, New York, USA DOI: 10.1145/2513456.2513490 ISBN: 978-1-4503-2112-9 * 6.1 Network Parameters * * 6.2 Network Structure * ----- | 1-12 | |

| | TECHNICAL FIELDS SEARCHED (IPC) |
|---|---|
| | G06F G06N H04L |

The present search report has been drawn up for all claims

| Place of search | Date of completion of the search | Examiner |
|---|---|---|
| Munich | 13 February 2019 | Frank, Mario |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RING et al.** IP2Vec: Learning Similarities between IP Addresses. *IEEE International Conference on Data Mining Workshops,* 2017
- **MIKOLOV et al.** Efficient Estimation of Word Representations in Vector Space. *Computing Research Repository,* 2013

- Learning internal representations by backpropagating errors. **D. E. RUMELHART ; G. E. HINTON ; R. J. WILLIAMS.** Institute for Cognitive Science Report 8506. University of California, September 1985